# EUROPEAN PATENT SPECIFICATION

(11) **EP 3 413 451 B1**
(45) Date of publication and mention of the grant of the patent: **20.01.2021**
(21) Application number: 16889354.3
(22) Date of filing: 24.10.2016
(51) Int. Cl.: H02M 1/42, H02M 3/156, H02M 1/00, H02M 1/12, H02M 7/06

(54) **POWER CONVERSION DEVICE**
STROMWANDLUNGSVORRICHTUNG
DISPOSITIF DE CONVERSION DE PUISSANCE

(30) Priority: 02.02.2016 JP 2016018123
(43) Date of publication of application: 12.12.2018
(73) Proprietor: Toshiba Carrier Corporation, Kawasaki-shi, Kanagawa 212-8585 (JP)
(72) Inventor: MAEKAWA, Tatsuya, Fuji-shi, Shizuoka 416-8521 (JP); KAWAI, Hidemitsu, Fuji-shi, Shizuoka 416-8521 (JP)
(74) Representative: Gramm, Lins & Partner Patent- und Rechtsanwälte PartGmbB
(86) International application number: PCT/JP2016/081466
(87) International publication number: WO 2017/134871

(56) References cited:
- EP-A1- 1 471 625
- JP-A- H0 322 865
- JP-A- H0 378 469
- JP-A- 2002 084 743
- JP-B2- 3 988 724
- US-A1- 2005 018 458
- US-A1- 2006 119 337
- US-A1- 2012 236 612
- US-A1- 2015 023 068

## Description

### Technical Field

Embodiments described herein relate generally to a power conversion apparatus configured to subject an AC voltage to full-wave rectification and boost the rectified voltage.

### Background Art

A power conversion apparatus provided with a full-wave rectifier circuit configured to subject a voltage of an AC power supply to full-wave rectification, and converter configured to boost an output voltage of the full-wave rectifier circuit by switching, and configured to subject the switching of the converter to feedback control in such a manner that an output voltage Vdc of the converter becomes a target value Vdcref (voltage control), and that an input current I to be input to the converter has a full-wave rectified waveform (current control) is known. The input current I to be input to the converter is made to have a full-wave rectified waveform, whereby a waveform of a current (called a power supply current) flowing through a power supply line between the AC power supply and full-wave rectifier circuit becomes a distortion-free sinusoidal wave. Thereby, the power factor is improved, and harmonic components included in the power supply current can be prevented from occurring. As the converter described above, for example, a boost chopper converter is used.

### Citation List

### Patent Literature

Patent Literature 1: JP 2002-84743 A
Patent literature 2: EP 1 471 625 A1 discloses a power factor improving converter and control method thereof
Patent literature 3: US 2006/0119337 A1 discloses a high frequency partial boost power factor correction control circuit.
Patent literature 4: JP H03-22865 A discloses that the deterioration of efficiency can prevented by a method wherein the optimum duty driving is effected while keeping the duty of a switching element or the voltage conversion ratio of the same in spite of the change of an AC power source voltage.
Patent literature 5: US 2012/0236612 A1 discloses a switching power supply apparatus with an alternating-current input power supply which is input to the input terminals of a power factor correction converter and a DC-DC converter is connected to output terminals.
Patent literature 6: US 2005/0018458 A1 discloses a switching power supply such that the step-up ratio of when the power-factor is improved does not increase, and the conversion efficiency can be improved.
Patent literature 7: US 2015/0023068 A1 discloses a switching power supply apparatus including a voltage step-up converter that increases input voltage in response to turning on and off of a switching element, a transformer including a primary winding and a secondary winding and the primary winding of which is connected to the output of the voltage step-up converter.

### Disclosure of Invention

In the power conversion apparatus described above, when the power supply voltage varies in a rising direction or when a load abruptly becomes light, the output voltage Vdc of the converter rises. When the output voltage Vdc exceeds a target value Vdcref, the power conversion apparatus adjusts the on/off duty of the switching of the converter in the decreasing direction to thereby lower the boosting factor of the converter.

However, when the on/off duty is decreased and the on-period of the switching becomes too short, it becomes impossible to make the input current I to be input to the converter have a distortion-free full-wave rectified waveform. That is, the on/off duty of switching has a lower limit which is not allowed to further be decreased in terms of control. Accordingly, at the time of a variation in the power supply voltage in the rising direction, even if it is tried to adjust the on/off duty in the decreasing direction, when the on/off duty reaches the lower limit, a distortion occurs in the full-wave rectified waveform of the input current I to be input to the converter. A distortion occurs in the sinusoidal wave of the power supply current flowing through the power supply line, when the distortion occurs in the full-wave rectified waveform of the input current I. By extension, a situation in which it is impossible to prevent the harmonic components from occurring is brought about.

An object of an embodiment of the present invention is to provide a power conversion apparatus capable of keeping a waveform of an input current to be input to a converter at a distortion-free full-wave rectified waveform, and thereby capable of securely preventing harmonics from occurring.

A power conversion apparatus of Claim 1 includes a full-wave rectifier circuit configured to subject a voltage of an AC power supply to full-wave rectification, a converter configured to boost an output voltage of the full-wave rectifier circuit by switching, and control means for controlling the on/off duty of switching of the converter in such a manner that an output voltage of the converter becomes a target value and that a waveform of an input current to be input to the converter becomes a full-wave rectified waveform, and correcting the target value to a rising direction when the on/off duty falls to a predetermined value.

### Brief Description of Drawings

FIG. 1 is a block diagram showing the configuration of an embodiment.
FIG. 2 is a view showing relationships between a target value Vdcref, power supply voltage Vac, input current I, and voltage instruction value Vref in the embodiment.
FIG. 3 is a view showing a waveform of the input current I of a case where the voltage instruction value Vref reaches a set value Vrefx in the embodiment.
FIG. 4 is a view showing a waveform of the input current I of a case where a difference between the target value Vdcref and a peak value of the power supply voltage Vac is large in the embodiment.
FIG. 5 is a flowchart showing control executed by a correcting section of the embodiment.
FIG. 6 is a view showing a situation in which the target value Vdcref is corrected to the rising direction in the embodiment.
FIG. 7 is a view showing a situation in which the target value Vdcref is corrected to the falling direction in the embodiment.

### Best Mode for Carrying Out the Invention

An embodiment of the present invention will be described below with reference to the accompanying drawings.

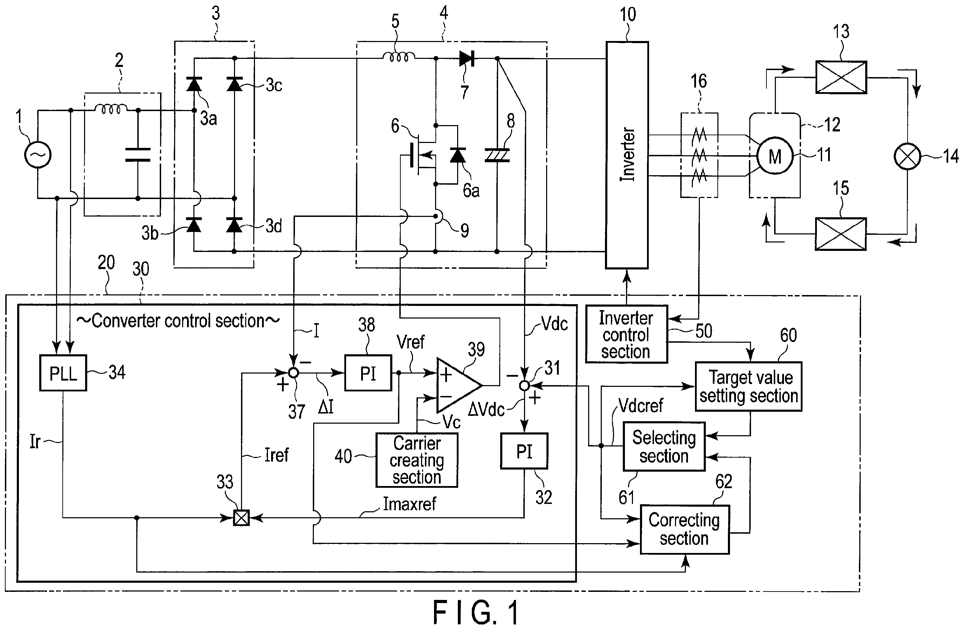

As shown in FIG. 1, a full-wave rectifier circuit 3 is connected to an AC power supply 1 through a noise filter 2, and converter 4 is connected to output ends of the full-wave rectifier circuit 3. The noise filter 2 eliminates noise to be superposed on the voltage (called the power supply voltage) Vac of the AC power supply 1 concomitantly with the switching of the converter 4. The full-wave rectifier circuit 3 subjects the power supply voltage Vac to full-wave rectification by means of four bridge-connected diodes 3a to 3d.

The converter 4 connected to the output ends of the full-wave rectifier circuit 3 is, for example, a boost chopper converter, and includes a reactor 5 configured to store therein energy, switching element (for example a MOSFET) 6 configured to short-circuit the DC power source after being subjected to full-wave rectification through the reactor 5, protective diode 6a antiparallel-connected to the switching element 6, diode 7 configured to send the energy of the reactor 5 to the load side and prevent a current from the load side from flowing backward, and smoothing capacitor 8 configured to smooth an output voltage of the diode 7, and the switching element 6 repeats turning on/off (switching) according to a drive signal (PWM signal) to be supplied thereto from a converter control section 30 to be described later to thereby boost the input voltage (full-wave rectified voltage) V to a predetermined level (target value Vdcref to be described later). In the current pathway between the switching element 6 and negative-side output end of the full-wave rectifier circuit 3, a current sensor 9 configured to detect the input current (reactor current) I to be input to the converter 4 is arranged.

An inverter 10 is connected to output ends of the converter 4. The inverter 10 converts the output voltage (voltage of the smoothing capacitor 8) Vdc of the converter 4 into three-phase AC voltages of a predetermined frequency F (and a level corresponding to the frequency F) by switching to be carried out according to a drive signal (PWM signal) to be supplied thereto from an inverter control section 50 to be described later, and outputs the converted three-phase AC voltages. A rotational speed (number of revolutions per unit time) of a brushless DC motor 11 is changed according to the frequency (output frequency) F of the output voltage of the inverter 10. The brushless DC motor 11 is a compressor motor configured to drive a compressor 12, and is accommodated in a sealed case of the compressor 12. The compressor 12 sucks and compresses a refrigerant and discharges the compressed refrigerant. A condenser (heat radiator) 13, expansion valve 14, and evaporator (heat absorber) 15 are piping-connected to the compressor 12 in sequence. By this piping connection, a refrigerating cycle in which the refrigerant discharged from the compressor 12 is made to flow into the evaporator 15 through the condenser 13 and expansion valve 14, and the refrigerant flowing out of the evaporator 15 is returned to the compressor 12 as indicated by arrows shown in FIG. 1 is formed. The condenser 13 radiates heat, and evaporator 15 absorbs heat. By the heat radiation and heat absorption, it is possible to heat or cool an object or space as the need arises. A current sensor 16 is arranged in the current pathway between the inverter 10 and brushless DC motor 11.

A controller 20 serving as a control section is connected to the converter 4 and inverter 10. The controller 20 includes a converter control section 30, inverter control section 50, target value setting section 60, selecting section 61, and correcting section 62.

The converter control section 30 is a section configured to subject the switching of the converter 4 to pulse-width modulation (PWM) control in such a manner that the output voltage Vdc of the converter 4 becomes the target value Vdcref (voltage control) and that a waveform of the input current I to be input to the converter 4 becomes a full-wave rectified waveform (current control), and includes a subtracting section 31, PI controller 32, multiplying section 33, phase locked loop section (PLL) 34, subtracting section 37, PI controller 38, PWM signal creating section 39, and carrier creating section 40.

The subtracting section 31 obtains a difference ΔVdc between the output voltage Vdc of the converter and target value Vdcref. The PI controller 32 obtains a current instruction value Imaxref used to set a value (maximum value) of the input current I to be input to the converter 4 by proportional-integral calculation in which the difference ΔVdc obtained by the subtracting section 31 is used as the input. The phase locked loop section 34 issues a reference current value Ir of a full-wave rectified waveform in synchronism with the current of the AC power supply 1. The multiplying section 33 multiplies the current instruction value Imaxref obtained by the PI controller 32 by the reference current value Ir issued from the phase locked loop section 34 to thereby convert the current instruction value Imaxref into a current instruction value Iref for harmonic prevention in synchronism with the current (called the power supply current) of the AC power supply 1. This current instruction value Iref has a waveform obtained by amplifying the reference current value Ir by using the current instruction value Imaxref.

The subtracting section 37 obtains a difference ΔI between the current instruction value Iref obtained by the multiplying section 33 and input current (detection current of the current sensor 9) I to be input to the converter 4. The PI controller 38 obtains a voltage instruction value Vref for pulse-width modulation by proportional-integral calculation in which the difference ΔI obtained by the subtracting section 37 is used as the input. The carrier creating section 40 issues a carrier signal voltage Vc having a triangular waveform of a predetermined frequency.

The PWM signal creating section 39 subjects the carrier signal voltage Vc issued from the carrier creating section 40 to pulse-width modulation (voltage comparison) by using the voltage instruction value Vref obtained by the PI controller 38 to thereby create a drive signal (PWM signal) having a pulsed waveform for switching of the switching element 6 of the converter 4. That is, the on/off duty (a ratio of the on-period in the reference period of switching) of the switching of the switching element 6 of the converter 4 is determined according to the level of the voltage instruction value Vref. However, from the time when the switching element 6 of the converter 4 receives an on-drive signal to the time when the switching element 6 enters a complete on-state, a delay time exists because of the characteristics of the element and, from the time when the switching element 6 receives an off-drive signal to the time when the switching element 6 enters a complete off-state, a delay time also exists. It is necessary to secure an on-period of the on/off duty after taking the delay time into account. Further, when the on/off duty of the switching of the converter 4 is decreased, and the on-period of the switching becomes too short, it becomes impossible to appropriately control the input current I to be input to the converter 4. It becomes impossible to decrease the input current I to be input to the converter 4. By taking these matters into account, in the on/off duty of the switching of the converter 4, there exists a lower limit (value of the shortest on-period) which is not allowed to further be decreased in terms of control. Accordingly, when an on-period of a drive signal (PWM signal) obtained by voltage comparison (pulse-width modulation) between the carrier signal voltage Vc and voltage instruction value Vref is shorter than an on-period which becomes the lower limit of the on/off duty, the PWM signal creating section 39 replaces the drive signal of the on-period which becomes the lower limit of the on/off duty with the drive signal obtained by the above voltage comparison, and outputs the drive signal obtained by the voltage comparison.

The subtracting section 31 and PI controller 32 functions as a voltage control system. The multiplying section 33, phase locked loop section 34, subtracting section 37, and PI controller 38 function as a current control system.

The inverter control section 50 estimates a speed (rotational speed) of the brushless DC motor 11 from the detection current (motor current) of the current sensor 16, and subjects the switching of the inverter 10 to PWM control in such a manner that the estimated rotational speed becomes a target speed corresponding to the magnitude of the load (refrigeration load).

The target value setting section 60 sets the minimum output voltage Vdc of the converter 4 necessary for the output voltage of the inverter 10 to obtain the target speed described above as the target value Vdcref. The selecting section 61 compares the target value Vdcref set by the target value setting section 60 and target value Vdcref corrected by the correcting section 62 with each other, and selects and outputs one of the target values Vdcref, whichever is higher.

When the on/off duty of the switching of the converter 4 falls to a predetermined value, the correcting section 62 corrects the target value Vdcref to the rising direction by a predetermined fixed value ΔVdcref and, when the on/off duty is higher than the predetermined value, corrects the target value Vdcref to the falling direction by the fixed value ΔVdcref. The predetermined value is, for example, the aforementioned lower limit of the on/off duty of the switching of the converter 4 in terms of control.

An operation of the correcting section 62 will specifically be described below. The correcting section 62 previously retains a voltage instruction value Vref corresponding to the lower limit (predetermined value) of the on/off duty as a set value Vrefx. Further, the correcting section 62 captures a variation in the power supply voltage Vac from a reference current value Ir issued from the phase locked loop section 34 of the converter control section 30 and, for each period of half a cycle or more of the captured variation, updates and stores the minimum voltage instruction value Vref (i.e., the minimum value of the on/off duty) in each period one by one and, compares the stored minimum voltage instruction value Vref and set value Vrefx with each other. When the minimum voltage instruction value Vref falls to the set value Vrefx, the correcting section 62 corrects, in the next control cycle (half a cycle of the power supply voltage Vac or predetermined cycle greater than the half a cycle), the target value Vdcref to the rising direction by a fixed value ΔVdcref. On the other hand, when the minimum voltage instruction value Vref is higher than the set value Vrefx, the correcting section 62 corrects, in the next control cycle, the target value Vdcref to the falling direction by the fixed value ΔVdcref. The correction of the correcting section 62 is also called Minimum-Duty control.

The aforementioned noise filter 2, full-wave rectifier circuit 3, converter 4, current sensor 9, inverter 10, current sensor 16, and controller 20 constitute the power conversion apparatus of this embodiment.

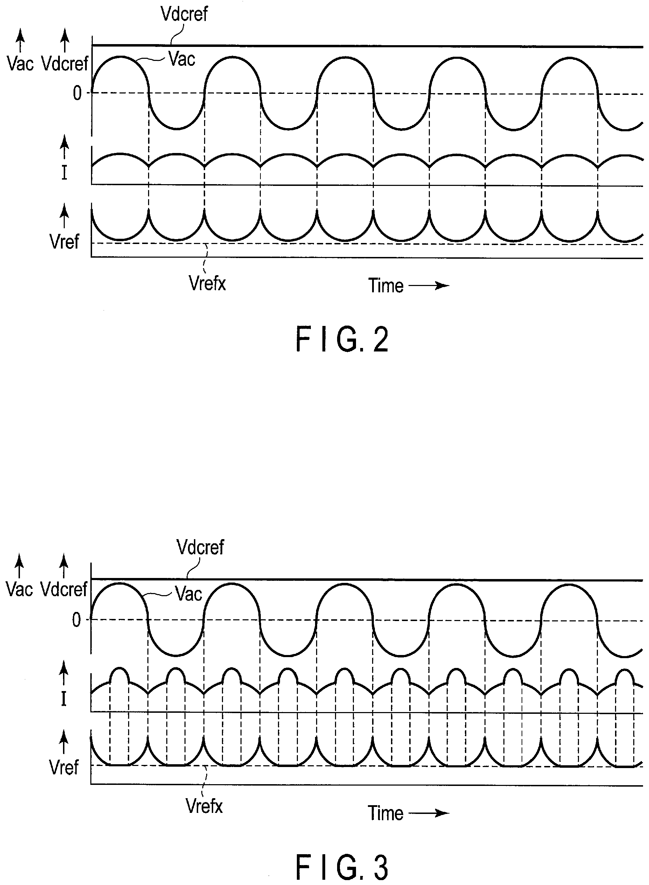

As shown in FIG. 2, when there is a certain degree of difference between the target value Vdcref and peak value of the power supply voltage Vac, the voltage instruction value Vref does not fall to the set value Vrefx. The waveform of the input current I flowing into the converter 4 becomes a distortion-free full-wave rectified waveform. That is, the waveform of the input current I to be input to the converter 4 becomes a smooth full-wave rectified waveform which changes with a small inclination in time to a rise and fall of the power supply voltage Vac, and becomes the maximum value in the vicinity of the peak value of the power supply voltage Vac. The voltage instruction value Vref becomes large at the time of the rise and fall of the power supply voltage Vac, and becomes the minimum value Vrefmin at the timing at which the power supply voltage Vac becomes the peak value.

As shown in FIG. 3, when the power supply voltage Vac varies in the rising direction, and the peak value thereof becomes close to the target value Vdcref, the voltage instruction value Vref is controlled in the falling direction and the on/off duty of the switching of the converter 4 is decreased in order to cope with a rise in the output voltage Vdc concomitant with the rise in the power supply voltage Vac. If there is no correction of the correcting section 62, the voltage instruction value Vref reaches the set value Vrefx (the on/off duty reaches the lower limit in terms of control) before the power supply voltage Vac becomes the peak value, and a distortion occurs in the full-wave rectified waveform of the input current I to be subsequently input to the converter 4.

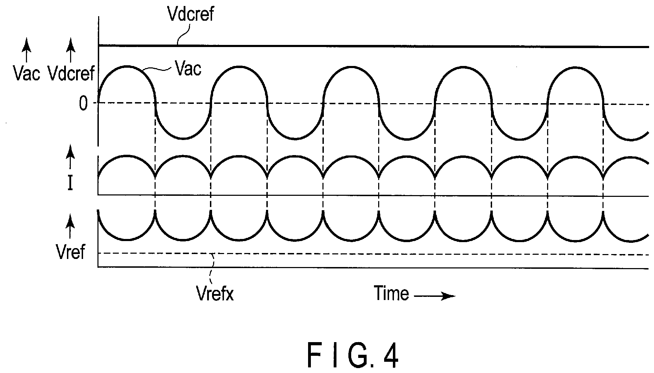

As shown in FIG. 4, when the power supply voltage Vac varies in the falling direction, and the peak value thereof is largely separated from the target value Vdcref, the voltage instruction value Vref is controlled in the rising direction in order to cope with a fall of the output voltage Vdc concomitant with the fall of the power supply voltage Vac, and the on/off duty of the switching of the converter 4 increases. When this operation is executed for each control cycle, the minimum voltage instruction value Vref in the control cycle is upwardly separated from the set value Vrefx, and hence the increasing correction of the voltage instruction value Vref to be carried out by the correcting section 62 is not carried out, and the waveform of the input current I to be input to the converter 4 becomes a distortion-free full-wave rectified waveform. However, in this case, the difference ΔVdc between the output voltage Vdc and target value Vdcref is large, and hence, if there is no correction of the correcting section 62, the current instruction value Imaxref enters a high-value state. When the current instruction value Imaxref becomes high, the boosting factor of the converter 4 rises more than necessary. In such a state, the power loss of the converter 4 becomes large.

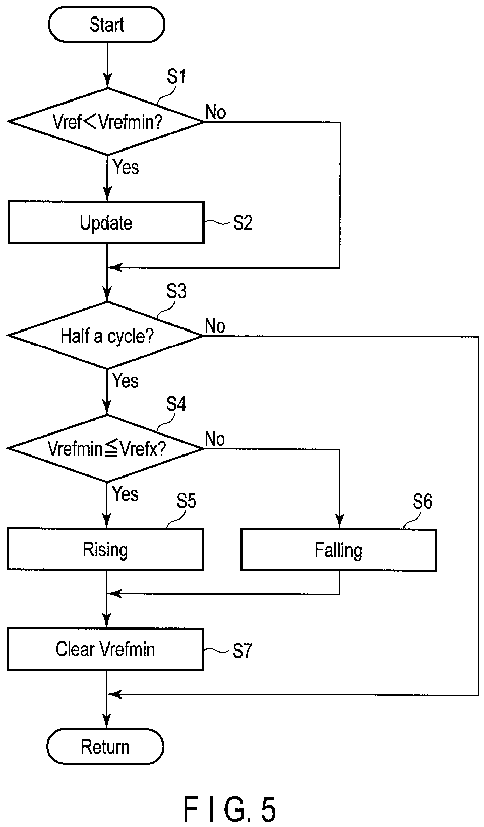

In order that these drawbacks may not occur, the correcting section 62 executes the control shown in the flowchart of FIG. 5.

That is, the correcting section 62 compares the voltage instruction value Vref at the present point in time and minimum value Vrefmin of the voltage instruction value Vref in the period of half a cycle (control cycle) of the power supply voltage Vac with each other in succession (step S1). When the detected voltage instruction value Vref is less than the minimum value Vrefmin (YES of step S1), the correcting section 62 updates and stores the voltage instruction value Vref at that time as the new minimum value Vrefmin (step S2). Then, the correcting section 62 determines whether or not half a cycle (control cycle) of the power supply voltage Vac has elapsed (step S3) and, when half a cycle has not elapsed yet (NO of step S3), repeats the processing of steps S1 and S2.

When half a cycle (control cycle) of the power supply voltage Vac has elapsed (YES of step S3), the correcting section 62 compares the minimum value Vrefmin of the voltage instruction value Vref and set value Vrefx with each other (step S4). When the minimum value Vrefmin falls to the set value Vrefx (YES of step S4), the correcting section 62 corrects the target value Vdcref to the rising direction by a fixed value ΔVdcref (step S5). When the minimum value Vrefmin is greater than the set value Vrefx (NO of step S4), the correcting section 62 corrects the target value Vdcref to the falling direction by the fixed value ΔVdcref (step S6).

After this correction, the correcting section 62 clears the minimum value Vrefmin which has been updated and stored in half the cycle (step S7), and returns to the processing of step S1.

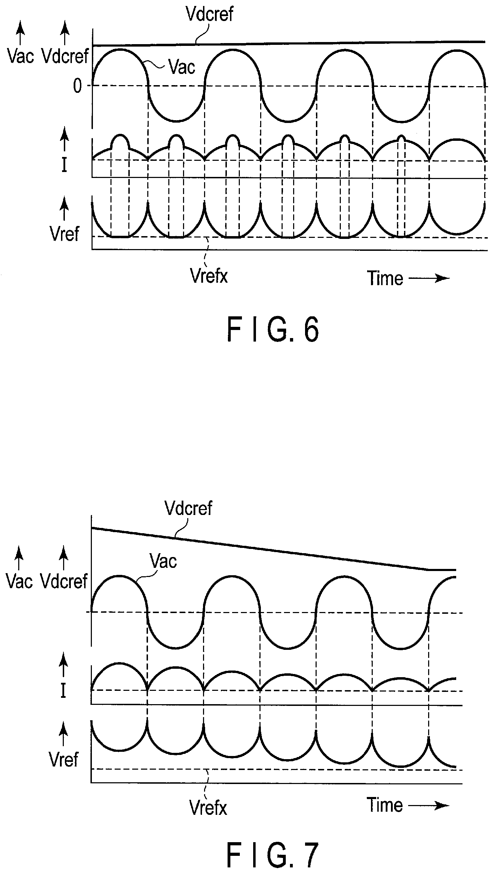

Accordingly, when the power supply voltage Vac varies in the upward direction, and the peak value thereof becomes close to the target value Vdcref as shown in FIG. 6, at first, the minimum value Vrefmin of the voltage instruction value Vref falls to the set value Vrefx, and a distortion occurs in the full-wave rectified waveform of the input current I to be input to the converter 4, but the target value Vdcref is corrected to the rising direction by fixed values ΔVdcref for each half a cycle of the power supply voltage Vac. In a short time, the minimum value Vrefmin of the voltage instruction value Vref enters a state where the minimum value Vrefmin is settled at a position a little distance away from the set value Vrefx, and the waveform of the input current I to be input to the converter 4 can be kept at a distortion-free full-wave rectified waveform. Thereby, the wave of the power supply current becomes a distortion-free sinusoidal wave, and harmonic components included in the power supply current can securely be prevented from occurring.

As shown in FIG. 7, when the power supply voltage Vac varies in the falling direction, and the peak value thereof is separate from the target value Vdcref, the voltage instruction value Vref exists at a position sufficiently higher than the set value Vrefx. In this case, although no distortion occurs in the full-wave rectified waveform of the input current I to be input to the converter 4, the difference ΔVdc between the output voltage Vdc and target value Vdcref is large, and hence the current instruction value Imaxref enters a state where the current instruction value Imaxref is high, and the boosting factor of the converter 4 rises more than necessary. If this state is left as it is, the power loss in the converter 4 becomes large.

In this case, the target value Vdcref is corrected to the falling direction by the predetermined value ΔVdcref for each half a cycle of the power supply voltage Vac. Thereby, a situation in which the boosting factor of the converter 4 rises more than necessary can be prevented from being caused, and the power loss in the converter 4 does not become large. That is, when the minimum value Vrefmin of the voltage instruction value Vref in the control cycle (half a cycle in this embodiment) reaches a state where the minimum value Vrefmin is greater than the set value Vrefx, the target value Vdcref in the next control cycle is corrected to the falling direction by fixed values ΔVdcref. Thereby, the minimum value Vrefmin of the voltage instruction value Vref enters a state where the minimum value Vrefmin is settled at a position in the vicinity of the set value Vrefx. The boosting factor of the converter 4 never rises more than necessary, and the power loss in the converter 4 can be prevented from increasing.

It should be noted that in the embodiment described above, although the current sensor 9 is arranged in the current pathway between the switching element 6 and negative-side output end of the full-wave rectifier circuit 3, the current sensor 9 may also be arranged in the current pathway between the positive-side output end of the full-wave rectifier circuit 3 and positive-side input end of the converter 4.

In the aforementioned embodiment, although the configuration is contrived in such a manner that when the on/off duty (voltage instruction value Vref) in the period of the control cycle falls to the predetermined value (set value Vrefx), the target value Vdcref is corrected to the rising direction by the fixed value ΔVdcref in the next control cycle and, when the minimum value Vrefmin of the on/off duty in the period of the control cycle rises to the predetermined value (set value Vrefx), the target value Vdcref is corrected to the falling direction by the fixed value ΔVdcref in the next control cycle, regarding the falling of the on/off duty, it is not necessary to carry out monitoring/correction by using the period of the control cycle as the criterion and, at a point in time when the on/off duty falls to the predetermined value, the target value Vdcref may be corrected to the rising direction by the fixed value ΔVdcref.

In the embodiment described above, although the lower limit of the on/off duty is determined as the predetermined value (set value Vrefx), a value somewhat higher than the lower limit of the on/off duty may be determined as the predetermined value. Furthermore, the configuration may also be contrived in such a manner that the lower limit of the on/off duty or a value somewhat higher than the lower limit is determined as a first predetermined value (set value Vrefx1) and, a second predetermined value (set value Vrefx2) higher than the first predetermined value by a very small amount is determined, when the on/off duty (voltage instruction value Vref) in the period of a predetermined control cycle falls to the first predetermined value, the target value Vdcref is corrected to the rising direction by the predetermined value ΔVdcref in the next predetermined control cycle and, when the minimum value Vrefmin of the on/off duty in the period of the predetermined control cycle is higher than second predetermined value, the target value Vdcref is corrected to the falling direction by the fixed value ΔVdcref in the next predetermined control cycle. Thereby, hysteresis characteristics can be secured in terms of control in the rising and falling of the target value Vdcref, and hence frequent variations in the target value Vdcref can be prevented from occurring.

Also when the first predetermined value and second predetermined value are used, regarding the falling of the on/off duty, it is not necessary to carry out monitoring/correction by using the period of the control cycle as the criterion and, at a point in time when the on/off duty falls to the first predetermined value, the target value Vdcref may be corrected to the rising direction by the fixed value ΔVdcref.

In the embodiment described above, although the descriptions have been given by taking the case where the load of the inverter 10 is a brushless DC motor as an example, also in the case where equipment other than the brushless DC motor is the load, the embodiment can be carried out in the same manner.

The embodiments and modifications described above have been presented by way of example only, and are not intended to limit the scope of the inventions. Indeed, the novel embodiments and modifications described herein may be embodied in a variety of other forms; furthermore, various omissions, substitutions and changes in the form of the embodiments described herein may be made. The invention is only limited by the appended claims.

### Industrial Applicability

The power conversion apparatus of the embodiment of the present invention is capable of supplying electric power to the compressor motor configured to drive the compressor.

## Claims

1. A power conversion apparatus comprising:
a full-wave rectifier circuit (3) configured to subject a voltage of an AC power supply (1) to full-wave rectification;
a converter (4) configured to boost an output voltage of the full-wave rectifier circuit (3) by switching; and
a control section (30) configured to control the on/off duty, i.e. the voltage instruction value (Vref), of switching of the converter (4) by a pulse-width modulation in such a manner that an output voltage of the converter (4) becomes a target value (Vdcref) and that a waveform of an input current to be input to the converter (4) becomes a full-wave rectified waveform,
**characterized in that**
the control section (30) is further configured to correct the target value (Vdcref) by a predetermined value (ΔVdcref) in a next predetermined control cycle, which is half a cycle of an AC power supply voltage of the AC power supply (1), to a rising direction when the on/off duty in a period of a predetermined control cycle falls to a predetermined value (Vrefx).

2. The power conversion apparatus of Claim 1, **characterized in that**
the control section (30) corrects the target value to a falling direction when the minimum value of the on/off duty is higher than the predetermined value in the period of the predetermined control cycle.

3. The power conversion apparatus of Claim 1, **characterized in that**
the control (30) section obtains a current instruction value Imaxref used to set a value (maximum value) of the input current I to be input to the converter (4) by proportional integral calculation in which a difference ΔVdc between an output voltage Vdc of the converter (4) and the target value Vdcref is used as an input, multiplies a reference current value Ir of the full-wave rectified waveform in synchronism with a current of the AC power supply (1) by the current instruction value Imaxref to thereby convert the current instruction value Imaxref into a current instruction value Iref in synchronism with the current of the AC power supply (1), obtains a voltage instruction value Vref for pulse-width modulation by proportional-integral calculation in which a difference ΔI between the current instruction value Iref and the input current I to be input to the converter (4) is used as an input,
subjects a carrier signal voltage Vc possessing a triangular waveform of a predetermined frequency to pulse-width modulation by using the voltage instruction value Vref to thereby create a drive signal for switching of the converter (4), and
corrects the target value Vdcref to the rising direction when the voltage instruction value Vref according to the on/off duty in the period of the predetermined control cycle falls to a set value Vrefx corresponding to the predetermined value.

4. The power conversion apparatus of Claim 3, **characterized in that**
the control section (30) corrects the target value Vdcref to the falling direction when the minimum value of the voltage instruction value Vref is higher than the set value Vrefx in the period of the predetermined control cycle.

5. The power conversion apparatus of any one of Claims 1 to 4, **characterized in that**
the on/off duty of switching of the converter (4) by the pulse-width modulation includes a lower limit which is not allowed to further be decreased in terms of control; and
the predetermined value is the same as the lower limit or is a value somewhat higher than the lower limit, such that no distortion occurs in the full-wave rectified waveform.

6. The power conversion apparatus of Claim 5, **characterized in that**
the control section (30) corrects the target value to the falling direction when the minimum value of the on/off duty in the period of the predetermined control cycle is higher than a second predetermined value higher than the predetermined value.

7. The power conversion apparatus of Claim 1, **characterized in that**
the control section (30) configured to correct the target value to a falling direction when the minimum value of the on/off duty in the period of the predetermined control cycle is higher than a second predetermined value higher than the predetermined value.

8. The power conversion apparatus of any one of Claims 1, 4, 6, and 7, **characterized in that**
the predetermined control cycle is a period of half a cycle or more of a voltage of the AC power supply (1).

## Patentansprüche

1. Leistungsumwandlungsvorrichtung aufweisend:
eine Vollwellengleichrichterschaltung (3), die so konfiguriert ist, dass sie eine Spannung einer Wechselstromversorgung (1) einer Vollwellengleichrichtung unterzieht;
einen Wandler (4), der so konfiguriert ist, dass er eine Ausgangsspannung der Vollwellengleichrichterschaltung (3) durch Schalten erhöht; und
einen Steuerbereich (30), der so konfiguriert ist, dass er den Ein-/Aus-Schaltbetrieb, das heißt das Spannungsanweisungsventil (Vref), des Schaltens des Wandlers (4) durch eine Pulsweitenmodulation so steuert, dass eine Ausgangsspannung des Wandlers (4) zu einem Zielwert (Vdcref) wird, und dass eine Wellenform eines in den Wandler (4) einzugebenden Eingangsstroms zu einer voll gleichgerichteten Wellenform wird,
**dadurch gekennzeichnet, dass**
der Steuerbereich (30) ferner konfiguriert ist, um den Zielwert (Vdcref) um einen vorbestimmten Wert (ΔVdcref) in einem nächsten vorbestimmten Steuerzyklus zu korrigieren, der ein halber Zyklus einer Wechselstromversorgungsspannung der Wechselstromversorgung (1) in eine ansteigende Richtung ist, wenn der Ein-/Aus-Schaltbetrieb in einer Periode eines vorbestimmten Steuerzyklus auf einen vorbestimmten Wert (Vrefx) fällt.

2. Leistungsumwandlungsvorrichtung nach Anspruch 1, **dadurch gekennzeichnet, dass** der Steuerbereich (30) den Zielwert in eine fallende Richtung korrigiert, wenn der Minimalwert des Ein-/Aus-Schaltbetriebs in der Periode des vorbestimmten Steuerzyklus höher als der vorbestimmte Wert ist.

3. Leistungsumwandlungsvorrichtung nach Anspruch 1, **dadurch gekennzeichnet, dass** der Steuerbereich (30) einen Strombefehlswert Imaxref erhält, der dazu verwendet wird, einen Wert (Maximalwert) des in den Wandler (4) einzugebenden Eingangsstroms I durch proportionale Integralberechnung einzustellen, bei der eine Differenz ΔVdc zwischen einer Ausgangsspannung Vdc des Wandlers (4) und dem Zielwert Vdcref als Eingabe verwendet wird, einen Referenzstrom Ir der vollgleich gerichteten Wellenform synchron mit dem Strom der Wechselstromversorgung (1) mit dem Strombefehlswert Imaxref multipliziert, um dadurch den Strombefehlswert Imaxref in einen Strombefehlswert Iref synchron mit dem Strom der Wechselstromversorgung (1) umzuwandeln,
einen Spannungsbefehlswert Vref für die Pulsweitenmodulation durch Proportional-Integralberechnung erhält, bei der eine Differenz ΔI zwischen dem aktuellen Befehlswert Iref und dem in den Wandler (4) einzugebenden Eingangsstrom I als Eingang verwendet wird,
einer Trägersignalspannung Vc ausgesetzt ist, die eine dreieckige Wellenform mit einer vorbestimmten Frequenz besitzt, eine Pulsbreitenmodulation unter Verwendung des Spannungsbefehlswerts Vref vollzieht, um dadurch ein Ansteuersignal zum Schalten des Wandlers (4) zu erzeugen, und
den Zielwert Vdcref in Aufwärtsrichtung korrigiert, wenn der Spannungsanweisungswert Vref entsprechend dem Ein-/Aus-Schaltbetrieb in der Periode des vorgegebenen Regelzyklus auf einen Sollwert Vref fällt, der dem vorgegebenen Wert entspricht.

4. Leistungsumwandlungsvorrichtung nach Anspruch 3, **dadurch gekennzeichnet, dass** der Steuerbereich (30) den Zielwert (Vdcref) in die fallende Richtung korrigiert, wenn der Minimalwert des Spannungsbefehlswerts (Vref) höher ist als der eingestellte Wert (Vrefx) in der Periode des vorbestimmten Steuerzyklus.

5. Leistungsumwandlungsvorrichtung nach einem der Ansprüche 1 bis 4, **dadurch gekennzeichnet, dass** der Ein-/Aus-Betrieb des Wandlers (4) durch die Pulsweitenmodulation einen unteren Grenzwert enthält, der in Bezug auf die Regelung nicht weiter abgesenkt werden darf; und der vorgegebene Wert gleich dem unteren Grenzwert oder ein etwas höherer Wert ist als der untere Grenzwert, sodass keine Verzerrung in der vollgleichgerichteten Wellenform auftritt.

6. Leistungsumwandlungsvorrichtung nach Anspruch 5, **dadurch gekennzeichnet, dass** der Steuerbereich (30) den Zielwert in die fallende Richtung korrigiert, wenn der Minimalwert des Ein-/Aus-Schaltbetriebes in der Periode des vorbestimmten Steuerzyklus höher ist als ein zweiter vorbestimmter Wert, der höher als der vorbestimmte Wert ist.

7. Leistungsumwandlungsvorrichtung nach Anspruch 1, **dadurch gekennzeichnet, dass** der Steuerbereich (30) konfiguriert ist, den Zielwert in eine fallende Richtung zu korrigieren, wenn der Minimalwert des Ein-/Aus-Schaltbetriebes in der Periode des vorbestimmten Steuerzyklus höher als ein zweiter vorbestimmter Wert ist, der höher als der vorbestimmte Wert ist.

8. Leistungsumwandlungsvorrichtung nach einem der Ansprüche 1, 4, 6 oder 7, **dadurch gekennzeichnet, dass** der vorgegebene Regelzyklus eine Periode von einem halben Zyklus oder mehr einer Spannung der Wechselstromversorgung (1) ist.

## Revendications

1. Appareil de conversion de puissance comprenant :
un circuit redresseur pleine onde (3) configuré pour soumettre une tension d'une alimentation électrique en courant alternatif, CA (1), à un redressement pleine onde ;
un convertisseur (4) configuré pour élever une tension de sortie du circuit redresseur pleine onde (3) par commutation ; et
une section de commande (30) configurée pour commander la fonction marche/arrêt, c'est-à-dire la valeur d'instruction de tension (Vref), de commutation du convertisseur (4) par une modulation d'impulsions en largeur d'une manière telle qu'une tension de sortie du convertisseur (4) devient une valeur cible (Vdcref) et qu'une forme d'onde d'un courant d'entrée devant être entré dans le convertisseur (4) devient une forme d'onde redressée pleine onde,
**caractérisé en ce que**
la section de commande (30) est en outre configurée pour corriger la valeur cible (Vdcref) par une valeur prédéterminée (ΔVdcref) dans un cycle de commande prédéterminé suivant, qui est la moitié d'un cycle d'une tension d'alimentation électrique en CA de l'alimentation électrique en CA (1), vers une direction ascendante lorsque la fonction marche/arrêt pendant une période d'un cycle de commande prédéterminé chute à une valeur prédéterminée (Vrefx).

2. Appareil de conversion de puissance selon la revendication 1, **caractérisé en ce que**
la section de commande (30) corrige la valeur cible vers une direction de chute lorsque la valeur minimale de la fonction marche/arrêt est supérieure à la valeur prédéterminée pendant la période du cycle de commande prédéterminé.

3. Appareil de conversion de puissance selon la revendication 1, **caractérisé en ce que**
la section de commande (30) obtient une valeur d'instruction de courant Imaxref utilisée pour définir une valeur (valeur maximale) du courant d'entrée I devant être entré dans le convertisseur (4) par un calcul d'intégrale proportionnelle dans lequel une différence ΔVdc entre une tension de sortie Vdc du convertisseur (4) et la valeur cible Vdcref est utilisée comme entrée,
multiplie une valeur de courant de référence Ir de la forme d'onde redressée pleine onde en synchronisme avec un courant de l'alimentation électrique en CA (1) par la valeur d'instruction de courant Imaxref pour ainsi convertir la valeur d'instruction de courant Imaxref en une valeur d'instruction de courant Iref en synchronisme avec le courant de l'alimentation électrique en CA (1),
obtient une valeur d'instruction de tension Vref pour une modulation d'impulsions en largeur par un calcul d'intégrale proportionnelle dans lequel une différence ΔI entre la valeur d'instruction de courant Iref et le courant d'entrée I devant être entré dans le convertisseur (4) est utilisée comme entrée,
soumet une tension de signal porteur Vc possédant une forme d'onde triangulaire d'une fréquence prédéterminée à une modulation d'impulsions en largeur en utilisant la valeur d'instruction de tension Vref pour ainsi créer un signal d'attaque pour la commutation du convertisseur (4), et
corrige la valeur cible Vdcref vers la direction ascendante lorsque la valeur d'instruction de tension Vref selon la fonction marche/arrêt pendant la période du cycle de commande prédéterminé chute à une valeur définie Vrefx correspondant à la valeur prédéterminée.

4. Appareil de conversion de puissance selon la revendication 3, **caractérisé en ce que**
la section de commande (30) corrige la valeur cible Vdcref vers la direction de chute lorsque la valeur minimale de la valeur d'instruction de tension Vref est supérieure à la valeur définie Vrefx pendant la période du cycle de commande prédéterminé.

5. Appareil de conversion de puissance selon l'une quelconque des revendications 1 à 4, **caractérisé en ce que**
la fonction marche/arrêt de commutation du convertisseur (4) par la modulation d'impulsions en largeur inclut une limite inférieure qui n'est pas autorisée à être davantage diminuée en termes de commande ; et
la valeur prédéterminée est identique à la limite inférieure ou est une valeur légèrement supérieure à la limite inférieure, de sorte qu'aucune distorsion ne se produise dans la forme d'onde redressée pleine onde.

6. Appareil de conversion de puissance selon la revendication 5, **caractérisé en ce que**
la section de commande (30) corrige la valeur cible vers la direction de chute lorsque la valeur minimale de la fonction marche/arrêt pendant la période du cycle de commande prédéterminé est supérieure à une seconde valeur prédéterminée supérieure à la valeur prédéterminée.

7. Appareil de conversion de puissance selon la revendication 1, **caractérisé en ce que**
la section de commande (30) est configurée pour corriger la valeur cible vers une direction de chute lorsque la valeur minimale de la fonction marche/arrêt pendant la période du cycle de commande prédéterminé est supérieure à une seconde valeur prédéterminée supérieure à la valeur prédéterminée.

8. Appareil de conversion de puissance selon l'une quelconque des revendications 1, 4, 6 et 7, **caractérisé en ce que**
le cycle de commande prédéterminé est une période de la moitié d'un cycle ou plus d'une tension de l'alimentation électrique en CA (1).
